# EUROPÄISCHE PATENTSCHRIFT

(11) **EP 3 915 163 B1**
(45) Veröffentlichungstag und Bekanntmachung des Hinweises auf die Patenterteilung: **18.11.2026**
(21) Anmeldenummer: 20701274.1
(22) Anmeldetag: 15.01.2020
(51) Int. Cl.: H01M 8/04313, H01M 8/04992, H01M 16/00

(54) **VERFAHREN UND SCHALTUNGSANORDNUNG ZUM EINSTELLEN EINER BETRIEBSSTRATEGIE FÜR EIN BRENNSTOFFZELLENSYSTEM**
METHOD AND CONTROL ARRANGEMENT FOR DETERMINING AN OPERATION STRATEGY OF A FUEL CELL SYSTEM
PROCÉDÉ ET ASSAMBLAGE DE DETERMINER UNE STRATEGIE OPÉRATOIRE D'UN SYSTÈME DE PILE À COMBUSTIBLE

(30) Priorität: 25.01.2019 DE 102019200949
(43) Veröffentlichungstag der Anmeldung: 01.12.2021
(73) Patentinhaber: Robert Bosch GmbH, 70442 Stuttgart (DE)
(72) Erfinder: HAHN, Sergei, 70199 Stuttgart (DE); BRAUN, Jochen, 71296 Heimsheim (DE)
(86) Internationale Anmeldenummer: PCT/EP2020/050899
(87) Internationale Veröffentlichungsnummer: WO 2020/152006

(56) Entgegenhaltungen:
- DE-A1- 102013 104 324
- DE-A1- 102017 207 477

## Beschreibung

Die vorliegende Erfindung betrifft ein Verfahren sowie eine Schaltungsanordnung zum Einstellen einer Betriebsstrategie bzw. Betriebsweise für ein Brennstoffzellensystem einer Leistungserzeugungsvorrichtung, insbesondere mit Bezug auf einen Start/Stopp-Betrieb und/oder einen Ein/Ausschalt-Betrieb der Leistungserzeugungsvorrichtung in Form eines Fahrzeugs, anhand einer Betriebsweise der Leistungserzeugungsvorrichtung. Ferner betrifft die Erfindung ein Computerprogramm, ein Speichermittel mit einem darauf gespeicherten Computerprogramm sowie eine Schaltungsanordnung zum entsprechenden Einstellen der Betriebsstrategie.

Bei Fahrzeugen mit Antriebssystemen, die ein Brennstoffzellensystem aufweisen, wird in der Regel das Oxidationsmittel Sauerstoff aus der Umgebungsluft genutzt, um in der Brennstoffzelle mit Wasserstoff zu Wasser bzw. Wasserdampf zu reagieren und damit durch elektrochemische Wandlung elektrische Leistung zu erzeugen.

Start/Stopp-Betriebe, bei welchen die Zündung des Fahrzeugs an ist bzw. das Fahrzeug nicht komplett ausgeschaltet ist bzw. eine Funktionsbereitschaft des Fahrzeugs initialisiert ist, und das manuelle Aus-/Einschalten des Fahrzeugs, bei welchem das Fahrzeug zumindest im Wesentlichen aus- bzw. eingeschaltet wird, stellen für Funktionskomponenten häufig eine signifikante thermische, mechanische, physikalisch und/oder chemische Mehrbelastung im Vergleich zu einem kontinuierlichen Betrieb des Fahrzeugs dar. Die Mehrbelastung kann zu einer entsprechenden Reduktion der Lebensdauer des Fahrzeugs und dessen Komponenten führen.

Aus dem Dokument DE 10 2017 207477 A1 ist ein Verfahren sowie ein System zu Betrieb eines Brennstoffzellensystems und mindestens eines Subsystems des Brennstoffzellensystems bekannt. Diese sind in einem Fahrzeug angeordnet, wobei die Energie für einen Antriebsstrang des Fahrzeugs sowohl aus dem Brennstoffzellensystem als auch einem alternativen Energiespeicher bezogen werden können.

Aus dem Dokument DE 10 2013 104324 A1 ist ein System und Verfahren zum Betreiben eines Brennstoffzellensystems in einem Stand-by-Betrieb bekannt. Das Verfahren beinhaltet das Bestimmen eines Leistungsgrenzwertes basierend auf einer Brennstoffzellenstapel- und Batterieleistungsoptimierung, wobei das System in den Stand-by-Betrieb eintreten wird, wenn eine Systemleistungsanfrage unter den Leistungsgrenzwert fallt.

Im Rahmen der vorliegenden Erfindung wird ein Verfahren gemäß Anspruch 1 vorgeschlagen, dass der voranstehend beschriebenen Problematik zumindest teilweise Rechnung trägt. Ferner werden ein Computerprogramm gemäß Anspruch 7, ein Speichermittel gemäß Anspruch 8 und eine Schaltungsanordnung gemäß Anspruch 9 vorgeschlagen. Vorteilhafte Ausführungsformen der Erfindung ergeben sich aus der Beschreibung, den Unteransprüchen und den Figuren. Dabei gelten Merkmale und Details, die im Zusammenhang mit dem Verfahren beschrieben sind, selbstverständlich auch im Zusammenhang mit dem erfindungsgemäßen Computerprogramm, dem erfindungsgemäßen Speichermittel, der erfindungsgemäßen Schaltungsanordnung und jeweils umgekehrt, sodass bezüglich der Offenbarung

zu den einzelnen Erfindungsaspekten stets wechselseitig Bezug genommen wird bzw. werden kann.

Gemäß einem ersten Aspekt der vorliegenden Erfindung wird ein Verfahren zum Einstellen einer Betriebsstrategie für ein Brennstoffzellensystem einer Leistungserzeugungsvorrichtung vorgeschlagen, die in Form eines Hybridfahrzeugs mit einer Traktionsbatterie ausgestaltet ist, wobei das Brennstoffzellensystem eine Luftzuführeinheit mit einem Verdichter zum Zuführen von Luft zu einem Brennstoffzellenstapel des Brennstoffzellensystems aufweist, und wobei die Betriebsstrategie des Brennstoffzellensystems dahingehend eingestellt wird, dass bei aktivierter Start/Stopp-Automatik des Hybridfahrzeugs abhängig von einer Betriebsweise der Leistungserzeugungsvorrichtung die folgenden Schritte durchgeführt werden:
- Ermitteln von wenigstens einem aktuellen Betriebsparameter der Leistungserzeugungsvorrichtung durch eine Ermittlungseinheit,
- Ermitteln von wenigstens einem kumulierten und/oder prädiktiven Betriebsparameter der Leistungserzeugungsvorrichtung durch die Ermittlungseinheit, und
- Einstellen der Betriebsstrategie für das Brennstoffzellensystem anhand des wenigstens einen aktuellen Betriebsparameters sowie des wenigstens einen kumulierten und/oder prädiktiven Betriebsparameters der Leistungserzeugungsvorrichtung durch eine Einstelleinheit, wenn bei der Ermittlung des wenigstens einen kumulierten und/oder prädiktiven Betriebsparameters (P2, P3, P4) des Hybridfahrzeugs festgestellt wird, dass über eine vordefinierbare Zeitspanne häufiger oder seltener als eine vordefinierbare Anzahl festgestellt wird, dass die benötigte Leistung im Hybridfahrzeug geringer als eine Minimalleistung des Brennstoffzellensystems (2) ist.

Mit Hilfe des erfindungsgemäßen Verfahrens lässt sich eine adaptive Anpassung der Betriebsstrategie bzw. eine Umschaltung zwischen verschiedenen Betriebsstrategien an bzw. für ein Verwendungsprofil der Leistungserzeugungsvorrichtung aktuell, online und über die Lebenszeit der Leistungsversorgungsvorrichtung auf Basis von historischen, aktuellen und/oder zukünftigen Daten realisieren.

Die Betriebsstrategie des Brennstoffzellensystems wird insbesondere abhängig von einer Start/Stopp-Betriebsweise, die durch eine Start/Stopp-Automatik realisiert wird, und/oder einer Ein/Ausschalt-Betriebsweise der Leistungserzeugungsvorrichtung eingestellt. D.h., die Betriebsstrategie des Brennstoffzellensystems kann abhängig von einem erkannten Start/Stopp-Betrieb und/oder einem erkannten Ein/Ausschalt-Betrieb der Leistungserzeugungsvorrichtung eingestellt werden. Unter einer Betriebsstrategie kann die Art und Weise verstanden werden, wie das Brennstoffzellensystem bzw. die Funktionskomponenten des Brennstoffzellensystems gesteuert und/oder geregelt werden oder sind.

Mit Hilfe des erfindungsgemäßen Verfahrens lässt sich die Degradation bzw. Alterung verschiedener Funktionsbauteile des Brennstoffzellensystems minimieren. Darüber hinaus kann der Gesamtwirkungsgrad des Brennstoffzellensystems verbessert werden. Durch die an den Start/Stopp-Betrieb und/oder Ein/Ausschalt-Betrieb der Leistungserzeugungsvorrichtung anpassbare Betriebsweise des Brennstoffzellensystems können eine Überauslegung von Funktionsbauteilen des Brennstoffzellensystems verhindert bzw. eine Anforderungsreduktion für die Funktionsbauteile erreicht werden. Darüber hinaus lässt sich durch das erfindungsgemäße Verfahren eine flexible Anpassung der Betriebsstrategie an die Fahrsituation und an den Fahrer einer als Fahrzeug ausgestalteten Leistungserzeugungsvorrichtung schaffen. Aktoren und/oder Funktionsbauteile wie ein Wasserstoff-Rezirkulationsgebläse, eine Kühlmittelpumpe und/oder Stellventile können geschont werden.

Das erfindungsgemäße Verfahren wird besonders für Brennstoffzellensysteme verwendet, die Aktoren mit Gaslagern umfassen. Für diese Lagervariante ist die Anpassung der Start-Stopp-Strategie von besonderer Relevanz, um die notwendigen Anforderungen an Effizienz und Lebensdauer erfüllen zu können.

Durch das Verfahren können ungünstige Zustände beim Start/Stopp-Betrieb und/oder beim Ein/Aus-Betrieb der Leistungserzeugungsvorrichtung für Funktionsbauteile und Subsysteme des Brennstoffzellensystems verhindert oder zumindest in ihrer Anzahl verringert werden.

Unter einem eingeschalteten Betriebszustand der Leistungsversorgungsvorrichtung ist ein Betriebszustand zu verstehen, in welchem sich die Leistungsversorgungsvorrichtung in einem aktiven Zustand befindet. Dabei ist vorzugsweise eine Zündung aktiv und eine als Fahrzeug ausgestaltete Leistungserzeugungsvorrichtung ist fahrbereit. Bei Bedarf kann in diesem Betriebszustand das Brennstoffzellensystem automatisch abgeschaltet oder wieder hinzugeschaltet werden. Unter einem ausgeschalteten Betriebszustand der Leistungsversorgungsvorrichtung kann ein Betriebszustand verstanden werden, in welchem die Leistungsversorgungsvorrichtung durch einen Nutzer manuell abgeschaltet ist bzw. wurde. In diesem Fall kann eine Zündung der als Fahrzeug ausgestalteten Leistungserzeugungsvorrichtung nicht mehr eingeschaltet sein. Ist die Leistungsversorgungsvorrichtung in Form eines Fahrzeugs ausgestaltet, kann das Fahrzeug im ausgeschalteten Betriebszustand als abgestellt oder zumindest abstellbereit betrachtet werden.

Anhand des wenigstens einen aktuellen Betriebsparameters und des wenigstens einen kumulierten und/oder prädiktiven Betriebsparameters kann eine Variation bzw. Anpassung einer Start/Stopp-Betriebsstrategie in Abhängigkeit verschiedener Betriebsparameter und/oder Randbedingungen durchgeführt werden. Die möglichen Varianten sind insbesondere sowohl für manuelle Abschaltvorgänge durch einen Nutzer als auch auf automatische Abschaltvorgänge durch eine Start/Stopp-Automatik der Leistungserzeugungsvorrichtung anwendbar.

Unter einem aktuellen Betriebsparameter kann ein temporär aktueller, direkt abgreifbarer bzw. messbarer Betriebsparameter bzw. ein Parameter aus einer modellbasierten Berechnung verstanden werden. Unter einem solchen Betriebsparameter kann auch eine aktuelle Leistung verstanden werden, die anhand von ermittelter Spannung und Strom berechnet wird. Das Verfahren wird vorzugsweise kontinuierlich durchgeführt. D.h., sobald die gewünschte Betriebsstrategie eingestellt ist, wird das Verfahren bzw. eine entsprechende Routine nicht beendet, sondern beginnt, insbesondere nach einer vordefinierbaren Zeit, erneut zu laufen.

Das Fahrzeug ist vorzugsweise in Form eines PKWs oder eines LKWs ausgestaltet. Alternativ zu einem Straßenfahrzeug kann unter dem Fahrzeug allerdings auch ein Luftfahrzeug, ein Schienenfahrzeug, ein Wasserfahrzeug oder ein Roboter verstanden werden.

Ein Funktionsbauteil kann beispielsweise ein Verdichter eines Luftzuführsystems des Brennstoffzellensystems zum Zuführen von Luft zu einem Brennstoffzellenstapel, insbesondere zu einem Kathodenabschnitt des Brennstoffzellenstapels des Brennstoffzellensystems sein. Solche Verdichter sind trotz ihrer grundsätzlichen Robustheit insbesondere aufgrund der darin ausgestalteten Gaslager nur begrenzt Start/Stopp-fähig, da es in den Gaslagern bei einem Start/Stopp-Betrieb zu einer verhältnismäßig hohen Reibung kommt und die Lager damit einer erhöhten Degradation ausgesetzt sind. Ein weiteres Beispiel für ein solches Funktionsbauteil ist der Brennstoffzellenstapel, in welchem bei zu kleinen Stapelleistungen bzw. entsprechend kleinen Strömen die Zellspannungen relativ stark ansteigen, wodurch sich die Degradation signifikant erhöht. Deshalb kann mit Hilfe des vorliegenden Verfahrens beispielsweise sichergestellt werden, dass der Brennstoffzellenstapel unterhalb einer vordefinierbaren Leistungsgrenze nicht betrieben werden darf. Hat das Luftzuführsystem schon viele sogenannte Reibstarts, also Start/Stopp-Vorgänge mit Festkörper-Reibung im Gaslager mit einer Drehzahl unterhalb einer Abhebedrehzahl hinter sich, kann das Luftzuführsystem bzw. der Verdichter in möglichst wenigen Fällen ganz abgeschaltet, d.h. möglichst im Leerlauf betrieben werden. Bei Fahrzeugen, die meist auf Langstrecken unterwegs sind, können auch im Stadtverkehr Abschaltungen vorgenommen werden, da die Gesamtanzahl der Start/Stopp-Vorgänge insgesamt niedrig ist. Weitere Beispiele werden anschließend mit Bezug auf die zugehörigen Unteransprüche beschrieben.

So ist es gemäß einer Ausführungsform der vorliegenden Erfindung möglich, dass bei einem Verfahren als der wenigstens eine aktuelle Betriebsparameter der Leistungserzeugungsvorrichtung ermittelt wird:
- aktueller Betriebszustand der Leistungserzeugungsvorrichtung,
- aktuelle Fahrzeuggeschwindigkeit der Leistungserzeugungsvorrichtung in Form eines Fahrzeugs,
- aktuelle Betriebstemperatur wenigstens einer Systemkomponente der Leistungsversorgungsvorrichtung,
- aktueller Ladezustand, SOC, einer Traktionsbatterie der Leistungsversorgungsvorrichtung, und/oder
- Solleistung aller elektrischen Komponenten der Leistungsversorgungsvorrichtung.

Hinsichtlich des aktuellen Betriebszustandes wird insbesondere ermittelt, ob die Leistungserzeugungsvorrichtung manuell ein- oder ausgestaltet wurde bzw. ist, d.h., ob eine Zündung der Leistungserzeugungsvorrichtung ein oder aus ist. Die aktuelle Betriebstemperatur kann beispielsweise von wenigstens einem

Brennstoffzellenstapel des Brennstoffzellensystems ermittelt werden. Unter der Sollleistung aller elektrischen Komponenten der

Leistungsversorgungsvorrichtung kann eine gewünschte oder erforderliche Leistung in einem Bordnetz einer als Fahrzeug ausgestalteten Leistungsversorgungsvorrichtung verstanden werden.

Ferner ist es bei einem Verfahren gemäß der vorliegenden Erfindung möglich, dass als der wenigstens eine kumulierte und/oder prädiktive Betriebsparameter der Leistungserzeugungsvorrichtung ermittelt wird:
- Alterungsdaten von wenigstens einem Funktionsbauteil der Leistungserzeugungsvorrichtung,
- Ein-/Ausschaltanzahl der Leistungserzeugungsvorrichtung,
- Häufigkeit und/oder Dauer von Stoppphasen der Leistungserzeugungsvorrichtung in Form eines Fahrzeugs,
- Häufigkeit und/oder Dauer von Abstellphasen der Leistungserzeugungsvorrichtung in Form eines Fahrzeugs,
- durchschnittlicher Bedarf an Antriebsleistung in der Leistungserzeugungsvorrichtung in Form eines Fahrzeugs,
- prädiktive Betriebsparameter anhand von Navigationsdaten eines Navigationssystems der Leistungserzeugungsvorrichtung (1) in Form eines Fahrzeugs, und/oder
- prädiktive Betriebsparameter anhand von Car2X-Daten eines Car2X-Empfängers der Leistungserzeugungsvorrichtung in Form eines Fahrzeugs.

Zur Ermittlung der Alterungsdaten kann beispielsweise ein Betriebsstundenzähler zum Zählen von Betriebsstunden von wenigstens einem der Funktionsbauteile ausgewertet werden. Zur Ermittlung der Alterungsdaten kann ferner eine modellbasierte Alterungsschätzung bzw. -berechnung verwendet werden. Der wenigstens eine prädiktive Betriebsparameter kann vorzugsweise auf Basis von Cloud-Informationen ermittelt werden. Bei Nutzung von Car2X-Daten ist bei einem stehenden Fahrzeug an Ampeln beispielsweise eine Prädiktion der erwarteten Haltedauer möglich, sodass eine Entscheidung zwischen Abschalten des Brennstoffzellensystems und Weiterbetrieb möglich ist.

Außerdem kann bei einem erfindungsgemäßen Verfahren Betriebsstrategie des Brennstoffzellensystems dahingehend eingestellt wird, dass bei aktivierter Start/Stopp-Automatik des Hybridfahrzeugs das Brennstoffzellensystem einschließlich des Verdichters abgeschaltet wird, wenn
- bei der Ermittlung des wenigstens einen aktuellen Betriebsparameters des Hybridfahrzeugs festgestellt wird, dass die benötigte Leistung im Hybridfahrzeug geringer als eine Minimalleistung des Brennstoffzellensystems ist, die Zündung des Hybridfahrzeugs an ist, und der Ladezustand der Traktionsbatterie, SOC, einem vordefinierbaren Sollzustand entspricht.

Diese Vorgehensweise kann verwendet werden, wenn aufgrund von einem erkannten Fahrer und von erkannten bzw. ermittelten Fahrzyklen erkannt wird, dass wenige Fälle auftreten, in welchen die Brennstoffzellenleistung nicht benötigt wird. Dies kann bei Fahrzeugen mit häufigen Autobahnfahrten bzw. Langstreckenfahrten der Fall sein. Wird zudem der Ladezustand der Traktionsbatterie als hoch bzw. im Sollzustand befindlich erkannt, kann dieses Verfahren angewandt werden. Unter der Luftzuführeinheit kann eine Sauerstoffzuführeinheit verstanden werden, durch welche Sauerstoff oder ein sauerstoffhaltiges Fluid wie Luft zum Brennstoffzellenstapel, insbesondere zu einem Kathodenabschnitt des Brennstoffzellenstapels, geführt wird. Darunter, dass ein Ladungszustand einem Sollzustand entspricht kann verstanden werden, dass ein Ladungswert der Traktionsbatterie über einem vordefinierbaren Schwellenwert oder in einem vordefinierbaren Soll-Wertebereich liegt. Darunter, dass über eine vordefinierbare Zeitspanne seltener als eine vordefinierbare Anzahl festgestellt wird, dass die benötigte Leistung im Hybridfahrzeug geringer als eine Minimalleistung des Brennstoffzellensystems ist, kann verstanden werden, dass ein Lastprofil bzw. ein Kennwert wenigstens einer hinsichtlich Start/Stopp-alterungskritischen Komponente kleiner ist als ein Referenzlastprofil bzw. ein Referenzkennwert. Dies kann beispielsweise der Fall sein, wenn der Kennwert in Form einer Anzahl an Verdichterstarts geringer als ein Referenzkennwert in Form einer Referenzanzahl an Verdichterstarts, insbesondere bei einer vordefinierbaren Betriebsdauer, ist. D.h., das Lastprofil kann in diesem Fall eine einfache Zahl Ein/Aus sein, bei welcher eine IST-Zahl mit einer Referenzzahl verglichen wird. Das Lastprofil kann historisch bis zu einem aktuellen Zeitpunkt verwendet werden, kann aber auch über Prädiktion vorausschauend die Zukunft mitberücksichtigen.

Bei einem Verfahren gemäß der vorliegenden Erfindung ist es zudem möglich, dass Betriebsstrategie des Brennstoffzellensystems dahingehend eingestellt wird, dass bei aktivierter Start/Stopp-Automatik des Hybridfahrzeugs das Brennstoffzellensystem mit Ausnahme des Verdichters, der anschließend noch für eine vordefinierbare Zeitdauer weiter im Leerlauf betrieben wird, abgeschaltet wird, wenn
- bei der Ermittlung des wenigstens einen aktuellen Betriebsparameters des Hybridfahrzeugs festgestellt wird, dass die benötigte Leistung im Hybridfahrzeug geringer als eine Minimalleistung des Brennstoffzellensystems ist, die Zündung des Hybridfahrzeugs an ist, und der Ladezustand der Traktionsbatterie, SOC, einem vordefinierbaren Sollzustand entspricht.

Dieses Verfahren kann genutzt werden, wenn die Brennstoffzellenleistung beispielsweise aufgrund von häufigen Kurzstrecken oder Staufahrten entsprechend häufig nicht benötigt wird. Außerdem kann dieses Verfahren angewandt werden, wenn der Ladezustand der Traktionsbatterie hoch ist bzw. sich im Sollzustand befindet. Dadurch können die Anzahl an Verdichterabschaltungen deutlich reduziert und der Verdichter entsprechend geschont werden. Darunter, dass über eine vordefinierbare Zeitspanne häufiger als eine vordefinierbare Anzahl festgestellt wird, dass die benötigte Leistung im Hybridfahrzeug geringer als eine Minimalleistung des Brennstoffzellensystems ist, kann verstanden werden, dass ein Lastprofil bzw. ein Kennwert wenigstens einer hinsichtlich einer Start/Stopp-alterungskritischen Komponente größer ist als ein Referenzlastprofil bzw. ein Referenzkennwert. Dies kann beispielsweise der Fall sein, wenn der Kennwert in Form einer Anzahl an Verdichterstarts größer als ein Referenzkennwert in Form einer Referenzanzahl an Verdichterstarts, insbesondere bei einer vordefinierbaren Betriebsdauer, ist. D.h., das Lastprofil kann in diesem Fall eine einfache Zahl Ein/Aus sein, bei welcher die IST-Zahl mit einer Referenzzahl verglichen wird. Das Lastprofil kann historisch bis zu einem aktuellen Zeitpunkt verwendet werden, kann aber auch über Prädiktion vorausschauend die Zukunft mitberücksichtigen.

Weiterhin ist es möglich, dass die Betriebsstrategie des Brennstoffzellensystems dahingehend eingestellt wird, dass bei aktivierter Start/Stopp-Automatik des Hybridfahrzeugs das Brennstoffzellensystem kontinuierlich betrieben wird, wenn
- bei der Ermittlung des wenigstens einen aktuellen Betriebsparameters des Hybridfahrzeugs festgestellt wird, dass die benötigte Leistung im Hybridfahrzeug geringer als eine Minimalleistung des Brennstoffzellensystems ist, die Zündung des Hybridfahrzeugs an ist, und der Ladezustand der Traktionsbatterie, SOC, kleiner als ein vordefinierbarer Sollzustand ist.

Diese Verfahrensvariante kann verwendet werden, wenn die Brennstoffzellenleistung regelmäßig oder aktuell nicht benötigt wird. Hierbei kann das Brennstoffzellensystem in einem möglichst guten Wirkungsgrad betrieben werden, wobei die Traktionsbatterie geladen werden kann. Während den abgeschalteten Zuständen des Brennstoffzellensystems kann das Fahrzeug mit Hilfe der Traktionsbatterie elektrisch angetrieben werden, sofern die benötigte Antriebsleistung sehr gering ist. Ein Verwendungsfall für ein solches Verfahren könnte eine Staufahrt bzw. eine Stopp-and-Go-Fahrt des Fahrzeugs sein.

Gemäß einer weiteren Ausgestaltungsvariante ist es möglich, dass Betriebsstrategie des Brennstoffzellensystems dahingehend eingestellt wird, dass das Brennstoffzellensystem kontinuierlich betrieben wird, wenn
- bei der Ermittlung des wenigstens einen aktuellen Betriebsparameters des Hybridfahrzeugs festgestellt wird, dass die benötigte Leistung im Hybridfahrzeug zumindest für eine vordefinierbare Zeitdauer geringer als ein vordefinierbarer Schwellenwert ist und die Zündung des Hybridfahrzeugs an ist.

Dieses Verfahren kann genutzt werden, wenn häufig Fälle auftreten, in welchen die Brennstoffzellenleistung nicht benötigt wird, wie beispielsweise bei einer Stadtfahrt, einer Staufahrt oder auf einer Kurzstrecke. Dass das Brennstoffzellensystem kontinuierlich betrieben wird bedeutet, dass das Brennstoffzellensystem nicht abgeschaltet wird. Unter dem vordefinierbaren Schwellenwert kann eine minimal zulässige Leistung des Brennstoffzellensystems verstanden werden. Wenn die Traktionsbatterie einen vordefinierbaren, insbesondere einen maximalen Ladezustand erreicht hat und das Brennstoffzellensystem weiterhin nicht abgeschaltet werden kann bzw. weiterhin kontinuierlich betrieben werden soll, können Zusatzverbraucher der Leistungserzeugungsvorrichtung und/oder des Brennstoffzellensystems eingeschaltet werden. Damit wird die benötigte Leistung größer als der vordefinierte Schwellenwert. D.h., das Brennstoffzellensystem kann auch kontinuierlich betrieben bzw. nicht abgeschaltet werden, wenn bei der Ermittlung des wenigstens einen aktuellen Betriebsparameters des Hybridfahrzeugs festgestellt wird, dass die benötigte Leistung im Hybridfahrzeug größer als der vordefinierbare Schwellenwert bzw. die minimal zulässige Leistung des Brennstoffzellensystems ist und die Zündung des Hybridfahrzeugs an ist.

Zudem kann bei einem Verfahren die Betriebsstrategie des Brennstoffzellensystems dahingehend eingestellt wird, dass das Brennstoffzellensystem kontinuierlich betrieben wird und die Traktionsbatterie des Hybridfahrzeugs geladen wird, bis der Ladezustand, SOC, einem vordefinierbaren Sollzustand entspricht, wenn
- bei der Ermittlung des wenigstens einen aktuellen Betriebsparameters des Hybridfahrzeugs festgestellt wird, dass die benötigte Leistung im Hybridfahrzeug geringer als eine Minimalleistung des Brennstoffzellensystems ist, die Zündung des Hybridfahrzeugs an ist, und der Ladezustand der Traktionsbatterie, SOC, kleiner als ein vordefinierbarer Sollzustand ist,
wobei anschließend eine Ausgangsleistung des Brennstoffzellensystems auf einen vordefinierbaren Leistungswert reduziert wird.

Diese Routine wird bevorzugt dann verwendet, wenn die Brennstoffzellenleistung regelmäßig nicht benötigt wird. Ist der Ladezustand der Traktionsbatterie in einem unteren Bereich und übersteigt der Leistungsbedarf des Bordnetzes im Stillstand des Fahrzeugs die Minimalleistung des Brennstoffzellensystems, so kann das Brennstoffzellensystem auch nie abgeschaltet werden. Unter der Minimalleistung des Brennstoffzellensystems ist der kleinstmögliche Leistungswert zu verstehen, mit welchem das Brennstoffzellensystem betrieben werden kann. Die Ausgangsleistung des Brennstoffzellensystems kann durch Reduzierung einer Leistungserzeugung und/oder durch Hinzuschaltung von Leistungsabnehmern reduziert werden.

Anschließend werden Ausführungsformen für Verfahren beschrieben, bei welchen sich die Leistungserzeugungsvorrichtung in einem ausgeschalteten bzw. manuell ausgeschalteten Betriebszustand befindet.

Gemäß einer Ausführungsform ist es möglich, dass die Betriebsstrategie des Brennstoffzellensystems dahingehend eingestellt wird, dass das Brennstoffzellensystem einschließlich des Verdichters abgeschaltet wird, wenn
- bei der Ermittlung des wenigstens einen aktuellen Betriebsparameters des Hybridfahrzeugs festgestellt wird, dass die benötigte angefragte Brennstoffzellenleistung gleich Null ist und das Hybridfahrzeug manuell durch den Fahrer abgeschaltet wurde, und
- wenn bei der Ermittlung des wenigstens einen kumulierten Betriebsparameters (P2, P3, P4) festgestellt wird, dass Abstellzeiten des Fahrzeugs länger als vordefinierbare Referenzabstellzeiten sind.

Dieses Verfahren kann beispielsweise bei einem Pendler-Fahrzeug angewandt werden. Ein typisches Pendler-Fahrzeug wird häufig nur für den Hin- und Rückweg zur Arbeit und nur gelegentlich für weitere Strecken benutzt. In einem solchen Fall sind die Fahrzeugabstellphasen signifikant lang, meist deutlich über beispielsweise 15 Minuten. Bei diesen Fahrzeugen bzw. bei Fahrzeugen mit einem solchen Fahrverhalten kann eine solche Strategie vorteilhafterweise eingesetzt werden, wenn der Ladezustand der Traktionsbatterie über einer notwendigen Schwelle liegt. Liegt der Ladezustand der Traktionsbatterie beim Abstellen des Fahrzeugs unter dieser Schwelle bzw. befindet sich nicht im vordefinierbaren Sollzustand, kann eine später erläuterte Strategie verwendet werden, gemäß welcher die Batterie mit einem guten Wirkungsgrad des Brennstoffzellensystems geladen wird. Die Ermittlung der benötigten Brennstoffzellenleistung wird vorzugsweise durchgeführt, wenn das Hybridfahrzeug bzw. die Leistungserzeugungsvorrichtung abgeschaltet ist. Hierbei kann ermittelt werden, ob die Leistungsanfrage an das Brennstoffzellensystem gleich null ist oder nicht.

Ferner ist es möglich, dass bei einem Verfahren Betriebsstrategie des Brennstoffzellensystems dahingehend eingestellt wird, dass das Brennstoffzellensystem mit Ausnahme des Verdichters, der für eine vordefinierbare Zeit weiter im Leerlauf betrieben wird, abgeschaltet wird, wenn
- bei der Ermittlung des wenigstens einen aktuellen Betriebsparameters des Hybridfahrzeugs festgestellt wird, dass die benötigte Leistung im Hybridfahrzeug geringer als eine Minimalleistung des Brennstoffzellensystems ist, das Hybridfahrzeug manuell durch den Fahrer abgeschaltet wurde, und
- bei der Ermittlung des wenigstens einen kumulierten und/oder prädiktiven Betriebsparameters des Hybridfahrzeugs festgestellt wird, dass eine vordefinierbare Anzahl von Abstellzeiten des Hybridfahrzeugs über einen vordefinierbaren Zeitraum jeweils kürzer als eine Sollzeit war.

Die Vorgehensweise kann beispielsweise bei einem Lieferfahrzeug genutzt werden, wenn der Fahrer das Fahrzeug häufig für eine kurze Zeitdauer abstellt. An dieser Stelle soll darauf hingewiesen werden, dass das Brennstoffzellensystem nicht zwangsweise ausgeschaltet werden oder sein muss, wenn das Hybridfahrzeug ausgeschaltet wird oder ist. Die Häufigkeit und/oder Länge der Abstellzeiten können durch ein im Hybridfahrzeug installiertes GPS-System und/oder einen Beschleunigungssensor des Hybridfahrzeugs ermittelt werden. Wird ein vordefinierbarer Zeitwert überschritten, ohne dass ein Fahrer des Hybridfahrzeugs das Hybridfahrzeug gestartet hat, kann der Verdichter abgeschaltet werden. Die Ermittlung der benötigten Leistung wird vorzugsweise durchgeführt, wenn das Hybridfahrzeug abgeschaltet ist. Hierbei kann ermittelt werden, ob die Leistungsanfrage an das Brennstoffzellensystem gleich null ist oder nicht.

Ferner kann bei einem Verfahren die Betriebsstrategie des Brennstoffzellensystems dahingehend eingestellt wird, dass das Brennstoffzellensystem noch für eine vordefinierbare Zeitdauer kontinuierlich betrieben wird und zumindest in dieser Zeitdauer die Traktionsbatterie geladen wird, und das Brennstoffzellensystem anschließend einschließlich des Verdichters abgeschaltet wird, wenn
- bei der Ermittlung des wenigstens einen aktuellen Betriebsparameters des Hybridfahrzeugs festgestellt wird, dass die benötigte Leistung im Hybridfahrzeug geringer als eine Minimalleistung des Brennstoffzellensystems ist und das Hybridfahrzeug manuell durch den Fahrer abgeschaltet wurde, und
- wenn der Ladezustand der Traktionsbatterie (4), SOC, kleiner als ein vordefinierbarer Sollzustand ist.

Auch damit kann unter anderem ein günstiger Verbrauch bei seltenen Ein- und Abschaltungen des Brennstoffzellensystems erreicht werden. Alternativ zum Laden der Traktionsbatterie können auch eine ausreichende bzw. vorbestimmbare Anzahl von Verbrauchern des Brennstoffzellensystems und/oder der Leistungserzeugungsvorrichtung eingeschaltet werden, beispielsweise zur Nachbereitung und/oder Konditionierung des Hybridfahrzeugs.

Bei einem Verfahren ist es außerdem möglich, dass die Betriebsstrategie des Brennstoffzellensystems dahingehend eingestellt wird, dass das Brennstoffzellensystem noch für eine vordefinierbare Zeitdauer, in welcher die Traktionsbatterie geladen wird, bis der Ladezustand der Traktionsbatterie einem vordefinierbaren Sollzustand entspricht, kontinuierlich betrieben und anschließend mit Ausnahme des Verdichters, der daran anschließend noch für eine vordefinierbare Zeit weiter im Leerlauf betrieben wird, abgeschaltet wird, wenn
- bei der Ermittlung des wenigstens einen aktuellen Betriebsparameters des Hybridfahrzeugs festgestellt wird, dass die benötigte Leistung im Hybridfahrzeug geringer als eine Minimalleistung des Brennstoffzellensystems ist und das Hybridfahrzeug manuell durch den Fahrer abgeschaltet wurde, und
- wenn bei der Ermittlung des wenigstens einen kumulierten Betriebsparameters (P2, P3, P4) festgestellt wird, dass Abstellzeiten des Fahrzeugs kürzer als vordefinierbare Referenzabstellzeiten sind.

Wird erkannt, dass die Fahrzeugabstellzeiten kurz sind, was beispielsweise bei Lieferverkehr oder Taxibetrieb vorkommt, kann das Brennstoffzellensystem zunächst die Traktionsbatterie laden. Danach kann der Verdichter im Leerlaufbetrieb weiterbetrieben werden. Die Nachlaufzeit kann entsprechend der Fahrzeugabstellzeiten adaptiert werden. Wird eine zeitliche Grenze der Abstellzeit überschritten, wird das gesamte Brennstoffzellensystem einschließlich Verdichter mit entsprechender Vorgehensweise abgestellt. Bei der Ermittlung des wenigstens einen aktuellen Betriebsparameters des Hybridfahrzeugs kann ferner der Ladezustand, SOC, der Traktionsüberprüft werden. D.h., der Ladezustand kann als weiterer Parameter zur in Rede stehenden Einstellung der Betriebsstrategie genutzt werden.

Gemäß einem weiteren Aspekt der vorliegenden Erfindung wird ein Computerprogramm zur Verfügung gestellt. Das Computerprogramm umfasst Befehle, die bei der Ausführung des Computerprogramms durch einen Computer diesen veranlassen, ein wie vorstehend beschriebenes Verfahren auszuführen. Damit bringt das erfindungsgemäße Computerprogramm die gleichen Vorteile mit sich, wie sie ausführlich mit Bezug auf das erfindungsgemäße Verfahren beschrieben worden sind. Das Computerprogramm kann als computerlesbarer Anweisungscode in jeder geeigneten Programmiersprache wie beispielsweise in JAVA, C++, oder C# implementiert sein. Das Computerprogramm kann auf einem computerlesbaren Speichermedium wie einer Datendisk, einem Wechsellaufwerk, einem flüchtigen oder nichtflüchtigen Speicher, oder einem Speicher/Prozessor abgespeichert sein. Der Anweisungscode kann einen Computer oder andere programmierbare Geräte wie ein Steuergerät, insbesondere ein Fahrzeugsteuergerät, derart programmieren, dass die gewünschten Funktionen ausgeführt werden. Ferner kann das Computerprogramm in einem Netzwerk wie beispielsweise dem Internet bereitgestellt werden bzw. sein, von dem es bei Bedarf von einem Nutzer heruntergeladen werden kann. So können ausgewählte Verfahrensschritte beispielsweise auf einem Cloud-Server durchgeführt und anschließend im Fahrzeug implementiert werden. Das Computerprogramm kann sowohl mittels einer Software, als auch mittels einer oder mehrerer spezieller elektronischer Schaltungen, d.h. in Hardware in Form eines Computerprogrammprodukts, oder in beliebig hybrider Form, d.h. mittels Software-Komponenten und Hardware-Komponenten, realisiert werden bzw. sein. Im Rahmen der vorliegenden Erfindung wird außerdem ein Speichermittel mit einem solchen Computerprogramm, das auf dem Speichermittel gespeichert ist, bereitgestellt. Unter dem Speichermittel kann ein Steuergerät, insbesondere ein Fahrzeugsteuergerät verstanden werden, in welchem das Computerprogramm zum Ausführen eines erfindungsgemäßen Verfahrens installiert ist.

Gemäß einem weiteren Aspekt wird eine Schaltungsanordnung zum Einstellen einer Betriebsstrategie für ein Brennstoffzellensystem einer Leistungserzeugungsvorrichtung, insbesondere in Form eines Fahrzeugs, abhängig von einer Betriebsweise der Leistungserzeugungsvorrichtung gemäß einem wie vorstehend erläuterten Verfahren zur Verfügung gestellt. Die Schaltungsanordnung weist eine Ermittlungseinheit zum Ermitteln von wenigstens einem aktuellen Betriebsparameter der Leistungserzeugungsvorrichtung sowie von wenigstens einem kumulierten und/oder prädiktiven Betriebsparameter der Leistungserzeugungsvorrichtung, und eine Einstelleinheit zum Einstellen der Betriebsstrategie für das Brennstoffzellensystem anhand des wenigstens einen aktuellen Betriebsparameters sowie des wenigstens einen kumulierten und/oder prädiktiven Betriebsparameters der Leistungserzeugungsvorrichtung, auf. Damit bringt auch die erfindungsgemäße Schaltungsanordnung die vorstehend beschriebenen Vorteile mit sich. Die Schaltungsanordnung kann sowohl mittels Hardware-Komponenten als auch mittels Software-Komponenten bereitgestellt sein.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: ein Flussdiagramm zum Erläutern eines Verfahrens gemäß einer Ausführungsform der vorliegenden Erfindung,
- Figur 2: ein Blockschaltbild zum Erläutern einer Schaltungsanordnung gemäß einer Ausführungsform der vorliegenden Erfindung, und
- Figur 3: ein Fahrzeug mit einer erfindungsgemäßen Schaltungsanordnung.

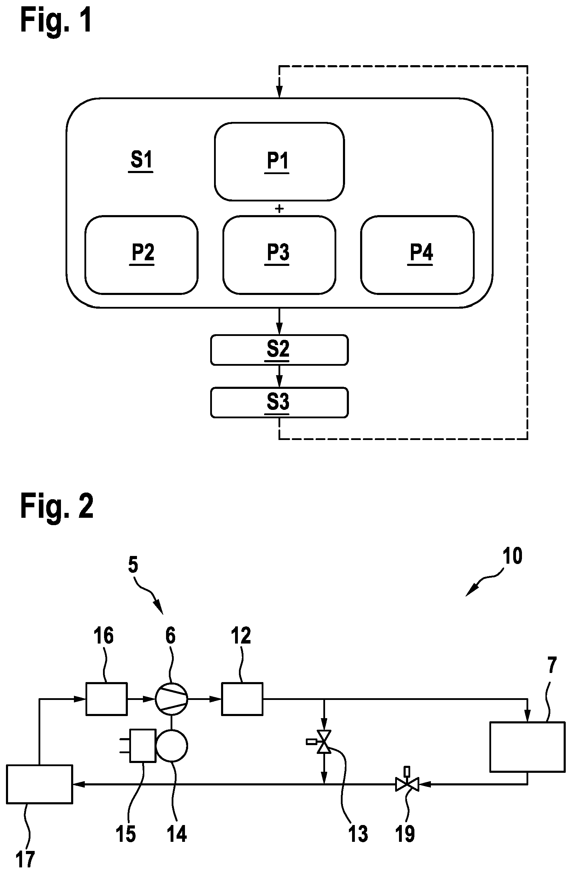

Elemente mit gleicher Funktion und Wirkungsweise sind in den Figuren 1 bis 3 jeweils mit denselben Bezugszeichen versehen.

Mit Bezug auf Fig. 1 wird anschließend ein Verfahren zum Einstellen einer Betriebsstrategie für ein Brennstoffzellensystem 2 einer Leistungserzeugungsvorrichtung 1 in Form eines Hybridfahrzeugs abhängig von einer Betriebsweise des Hybridfahrzeugs beschrieben. Hierzu wird in einem ersten Schritt S1 wenigstens ein aktueller Betriebsparameter P1 des Hybridfahrzeugs durch eine Ermittlungseinheit 3 ermittelt. Genauer gesagt werden als der wenigstens eine aktuelle Betriebsparameter P1 ein aktueller Betriebszustand des Hybridfahrzeugs 1, eine aktuelle Fahrzeuggeschwindigkeit des Hybridfahrzeugs, eine aktuelle Betriebstemperatur wenigstens einer Systemkomponente des Hybridfahrzeugs, ein aktueller Ladezustand, SOC, einer Traktionsbatterie 4 des Hybridfahrzeugs und/oder eine gewünschte Leistung im Bordnetz des Hybridfahrzeugs ermittelt.

Zudem wird durch die Ermittlungseinheit 3 wenigstens ein kumulierter und/oder prädiktiver Betriebsparameter P2, P3, P4 des Hybridfahrzeugs ermittelt. Genauer gesagt werden als der wenigstens eine kumulierte und/oder prädiktive Betriebsparameter P2, P3, P4 des Hybridfahrzeugs Informationen P2 zum Alterungszustand wie beispielsweise Alterungsdaten von wenigstens einem Funktionsbauteil des Hybridfahrzeugs oder eine Ein-/Ausschaltanzahl des Hybridfahrzeugs, Informationen P3 zu einem Fahrer oder einem Fahrprofil des Fahrers des Hybridfahrzeugs wie Häufigkeit und/oder Dauer von Stoppphasen des Hybridfahrzeugs, Häufigkeit und/oder Dauer von Abstellphasen des Hybridfahrzeugs in Form eines Fahrzeugs, oder ein durchschnittlicher Bedarf an Antriebsleistung im Hybridfahrzeug, und/oder Prädiktionsdaten P4 wie Navigationsdaten eines Navigationssystems des Hybridfahrzeugs und/oder Car2X-Daten eines Hybridfahrzeugs ermittelt und wie vorstehend beschrieben verwendet.

In einem zweiten Schritt S2 kann anschließend eine geeignete Betriebsstrategie für das Brennstoffzellensystem 2 anhand des wenigstens einen aktuellen Betriebsparameters P1 sowie des wenigstens einen kumulierten und/oder prädiktiven Betriebsparameters P2, P3, P4 der Leistungserzeugungsvorrichtung ermittelt werden. Dies kann erneut durch die Ermittlungseinheit 3 durchgeführt werden.

Sobald die geeignete Betriebsstrategie ermittelt wurde, kann in einem dritten Schritt S3 die ermittelte Betriebsstrategie für das Brennstoffzellensystem 2 durch eine Einstelleinheit 8 eingestellt werden. Daraufhin kann das Verfahren basierend auf den nun vorliegenden Betriebsparametern auf eine vordefinierbare Weise erneut beginnen. Die Umschaltung bzw. Adaption der Betriebsstrategie können von einer beliebigen Variante auf jede andere Variante erfolgen.

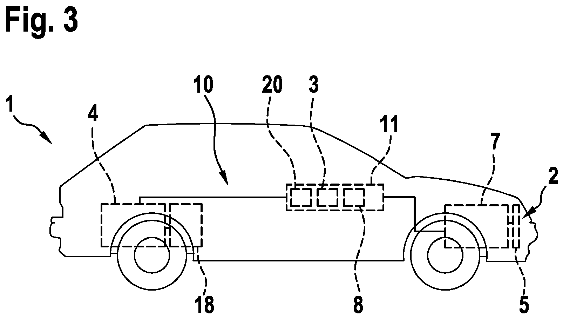

In Fig. 2 ist ein spezifischer Teil einer in Fig. 3 dargestellten Schaltungsanordnung 10 in Form eines Blockschaltbildes dargestellt. Wie in Fig. 2 zu erkennen, kann einem Brennstoffzellenstapel 7 bzw. einem Kathodenabschnitt des Brennstoffzellenstapels 7 Luft aus der Umgebung 17 des Hybridfahrzeugs durch eine Luftzuführeinheit 5 des Brennstoffzellensystems 2 zugeführt werden. Die Luftzuführeinheit 5 weist einen Luftfilter 16, einen Verdichter 6 und einen Zwischenkühler 12 auf. Stromabwärts des Zwischenkühlers ist eine Bypassleitung mit einem Bypassventil 13 ausgestaltet, über welches bei einer Abschaltung des Brennstoffzellensystems 2 die Luft vorbei am Kathodenabschnitt geleitet werden kann. Stromabwärts des Brennstoffzellenstapels 7 bzw. des Kathodenabschnitts des Brennstoffzellenstapels 7 ist ein Sperrventil 19 angeordnet, das für den Fall, dass das Bypassventil 13 geöffnet wird, sperrt, um im Kathodenabschnitt eine Sauerstoffverarmung einzuleiten. Das in Fig. 2 dargestellte System weist ferner einen Elektromotor 14 und einen zugehörigen Inverter 15 auf.

In Fig. 3 ist eine Leistungserzeugungsvorrichtung 1 in Form eines Hybridfahrzeugs mit einer Traktionsbatterie 4, einem Brennstoffzellensystem 2 und einem Brennstofftank 18 dargestellt. Das Hybridfahrzeug weist eine Schaltungsanordnung 10 zum Einstellen der Betriebsstrategie für das Brennstoffzellensystem 2 des Hybridfahrzeugs abhängig von einer Betriebsweise des Hybridfahrzeugs auf. Das Hybridfahrzeug weist ferner ein Steuergerät 11 mit einer Ermittlungseinheit 3 und einer Einstelleinheit 8 auf. Auf dem Steuergerät 11 ist außerdem ein Computerprogramm 20 zum Ausführen des Vorstehend beschriebenen Verfahrens installiert.

Neben den dargestellten Ausführungsformen lässt die Erfindung weitere Gestaltungsgrundsätze zu. D.h., die Erfindung soll nicht auf die mit Bezug auf die Figuren erläuterten Ausführungsbeispiele beschränkt betrachtet werden. Insbesondere können im Rahmen des in Fig. 1 dargestellten Flussdiagramms bzw. des entsprechenden Verfahrens die vorstehend mit Bezug auf die Unteransprüche im Detail erläuterten Verfahrensformen durchgeführt werden.

Ferner ist darauf hinzuweisen, dass bei einem Hybridfahrzeug üblicherweise sowohl eine Wasserstoff-Rezirkulationspumpe als auch eine Kühlmittelpumpe beim Ausschalten des Hybridfahrzeugs in einer Endphase einer Nachlaufprozedur abgeschaltet werden können. Bei Erkennen von kurzen Abstellphasen des Hybridfahrzeugs, beispielsweise im Lieferbetrieb, können zumindest diese Aktoren trotzdem weiterbetrieben werden.

## Patentansprüche

1. Verfahren zum Einstellen einer Betriebsstrategie für ein Brennstoffzellensystem (2) einer Leistungserzeugungsvorrichtung (1), die in Form eines Hybridfahrzeugs mit einer Traktionsbatterie (4) ausgestaltet ist und das Brennstoffzellensystem (2) eine Luftzuführeinheit (5) mit einem Verdichter (6) zum Zuführen von Luft zu einem Brennstoffzellenstapel (7) des Brennstoffzellensystems (2) aufweist, wobei die Betriebsstrategie des Brennstoffzellensystems (2) eingestellt wird, indem bei aktivierter Start/Stopp-Automatik des Hybridfahrzeugs abhängig von einer Betriebsweise der Leistungserzeugungsvorrichtung (1), die Schritte durchgeführt werden:
- Ermitteln von wenigstens einem aktuellen Betriebsparameter (P1) der Leistungserzeugungsvorrichtung (1) durch eine Ermittlungseinheit (3),
- Ermitteln von wenigstens einem kumulierten und/oder prädiktiven Betriebsparameter (P2, P3, P4) der Leistungserzeugungsvorrichtung (1) durch die Ermittlungseinheit (3), und
- Einstellen der Betriebsstrategie für das Brennstoffzellensystem (2) anhand des wenigstens einen aktuellen Betriebsparameters (P1) sowie des wenigstens einen kumulierten und/oder prädiktiven Betriebsparameters (P2, P3, P4) der Leistungserzeugungsvorrichtung (1) durch eine Einstelleinheit (8),
wenn bei der Ermittlung des wenigstens einen kumulierten und/oder prädiktiven Betriebsparameters (P2, P3, P4) des Hybridfahrzeugs festgestellt wird, dass über eine vordefinierbare Zeitspanne häufiger oder seltener als eine vordefinierbare Anzahl festgestellt wird, dass die benötigte Leistung im Hybridfahrzeug geringer als eine Minimalleistung des Brennstoffzellensystems (2) ist.

2. Verfahren nach Anspruch 1,
**dadurch gekennzeichnet,**
**dass** als der wenigstens eine aktuelle Betriebsparameter (P1) der Leistungserzeugungsvorrichtung (1) ermittelt wird:
- aktueller Betriebszustand der Leistungserzeugungsvorrichtung (1),
- aktuelle Fahrzeuggeschwindigkeit der Leistungserzeugungsvorrichtung (1) in Form eines Fahrzeugs,
- aktuelle Betriebstemperatur wenigstens einer Systemkomponente der Leistungsversorgungsvorrichtung (1),
- aktueller Ladezustand, SOC, einer Traktionsbatterie (4) der Leistungsversorgungsvorrichtung (1), und/oder
- Solleistung aller elektrischen Komponenten der Leistungsversorgungsvorrichtung (1).

3. Verfahren nach einem der voranstehenden Ansprüche,
**dadurch gekennzeichnet,**
**dass** als der wenigstens eine kumulierte und/oder prädiktive Betriebsparameter (P2, P3, P4) der Leistungserzeugungsvorrichtung (1) ermittelt wird:
- Alterungsdaten von wenigstens einem Funktionsbauteil der Leistungserzeugungsvorrichtung,
- Ein-/Ausschaltanzahl der Leistungserzeugungsvorrichtung (1),
- Häufigkeit und/oder Dauer von Stoppphasen der Leistungserzeugungsvorrichtung (1) in Form eines Fahrzeugs,
- Häufigkeit und/oder Dauer von Abstellphasen der Leistungserzeugungsvorrichtung (1) in Form eines Fahrzeugs,
- durchschnittlicher Bedarf an Antriebsleistung in der Leistungserzeugungsvorrichtung (1) in Form eines Fahrzeugs,
- prädiktive Betriebsparameter (P4) anhand von Navigationsdaten eines Navigationssystems der Leistungserzeugungsvorrichtung (1) in Form eines Fahrzeugs, und/oder
- prädiktive Betriebsparameter (P4) anhand von Car2X-Daten eines Car2X-Empfängers der Leistungserzeugungsvorrichtung (1) in Form eines Fahrzeugs.

4. Verfahren nach einem der voranstehenden Ansprüche,
**dadurch gekennzeichnet,**
**dass** die Betriebsstrategie des Brennstoffzellensystems (2) dahingehend eingestellt wird, dass das Brennstoffzellensystem (2) einschließlich des Verdichters (6) abgeschaltet wird, wenn
- bei der Ermittlung des wenigstens einen aktuellen Betriebsparameters (P1) des Hybridfahrzeugs festgestellt wird, dass die benötigte Leistung im Hybridfahrzeug geringer als eine Minimalleistung des Brennstoffzellensystems (2) ist, die Zündung des Hybridfahrzeugs an ist, und der Ladezustand der Traktionsbatterie (4), SOC, einem vordefinierbaren Sollzustand entspricht.

5. Verfahren nach einem der voranstehenden Ansprüche,
**dadurch gekennzeichnet,**
**dass** die Betriebsstrategie des Brennstoffzellensystems (2) dahingehend eingestellt wird, dass das Brennstoffzellensystem (2) mit Ausnahme des Verdichters (6), der anschließend noch für eine vordefinierbare Zeitdauer weiter im Leerlauf betrieben wird, abgeschaltet wird, wenn
- bei der Ermittlung des wenigstens einen aktuellen Betriebsparameters (P1) des Hybridfahrzeugs festgestellt wird, dass die benötigte Leistung im Hybridfahrzeug geringer als eine Minimalleistung des Brennstoffzellensystems (2) ist, die Zündung des Hybridfahrzeugs an ist, und der Ladezustand der Traktionsbatterie (4), SOC, einem vordefinierbaren Sollzustand entspricht.

6. Verfahren nach einem der voranstehenden Ansprüche,
**dadurch gekennzeichnet,**
**dass** die Betriebsstrategie des Brennstoffzellensystems (2) dahingehend eingestellt wird, dass das Brennstoffzellensystem (2) kontinuierlich betrieben wird, wenn
- bei der Ermittlung des wenigstens einen aktuellen Betriebsparameters (P1) des Hybridfahrzeugs festgestellt wird, dass die benötigte Leistung im Hybridfahrzeug geringer als eine Minimalleistung des Brennstoffzellensystems (2) ist, die Zündung des Hybridfahrzeugs an ist, und der Ladezustand der Traktionsbatterie (4), SOC, kleiner als ein vordefinierbarer Sollzustand ist.

7. Computerprogramm (20), umfassend Befehle, die bei der Ausführung des Computerprogramms (20) durch einen Computer diesen veranlassen, das Verfahren nach einem der Ansprüche 1 bis 6 auszuführen.

8. Speichermittel mit einem darauf gespeicherten Computerprogramm (20), das zum Durchführen eines Verfahrens nach einem der Ansprüche 1 bis 6 konfiguriert und ausgestaltet ist.

9. Schaltungsanordnung (10), die zum Einstellen einer Betriebsstrategie für ein Brennstoffzellensystem (2) einer Leistungserzeugungsvorrichtung (1) konfiguriert ist, insbesondere in Form eines Fahrzeugs, abhängig von einer Betriebsweise der Leistungserzeugungsvorrichtung (1) gemäß einem Verfahren der Ansprüche 1 bis 6, aufweisend:
- eine Ermittlungseinheit zum Ermitteln von wenigstens einem aktuellen Betriebsparameter (P1) der Leistungserzeugungsvorrichtung (1) sowie von wenigstens einem kumulierten und/oder prädiktiven Betriebsparameter (P2, P3, P4) der Leistungserzeugungsvorrichtung (1), und
- eine Einstelleinheit zum Einstellen der Betriebsstrategie für das Brennstoffzellensystem (2) anhand des wenigstens einen aktuellen Betriebsparameters (P1) sowie des wenigstens einen kumulierten und/oder prädiktiven Betriebsparameters (P2, P3, P4) der Leistungserzeugungsvorrichtung (1).

## Claims

1. Method for setting an operating strategy for a fuel cell system (2) of a power generation device (1) that is designed in the form of a hybrid vehicle with a traction battery (4) and the fuel cell system (2) has an air supply unit (5) with a compressor (6) for supplying air to a fuel cell stack (7) of the fuel cell system (2), wherein the operating strategy of the fuel cell system (2) is set by virtue of the following steps being carried out when the automatic start/stop system of the hybrid vehicle has been activated, depending on an operating mode of the power generation device (1):
- ascertaining at least one present operating parameter (P1) of the power generation device (1) by means of an ascertainment unit (3),
- ascertaining at least one cumulative and/or predictive operating parameter (P2, P3, P4) of the power generation device (1) by means of the ascertainment unit (3), and
- setting the operating strategy for the fuel cell system (2) on the basis of the at least one present operating parameter (P1) and the at least one cumulative and/or predictive operating parameter (P2, P3, P4) of the power generation device (1) by means of a setting unit (8),
when it is determined during the ascertainment of the at least one cumulative and/or predictive operating parameter (P2, P3, P4) of the hybrid vehicle that it is determined, over a predefinable period of time, more frequently or less often than a predefinable number, that the required power in the hybrid vehicle is less than a minimum power of the fuel cell system (2).

2. Method according to Claim 1,
**characterized**
**in that** the following is/are ascertained as the at least one present operating parameter (P1) of the power generation device (1):
- present operating state of the power generation device (1),
- present vehicle speed of the power generation device (1) in the form of a vehicle,
- present operating temperature of at least one system component of the power supply device (1),
- present state of charge, SOC, of a traction battery (4) of the power supply device (1), and/or
- target power of all the electrical components of the power supply device (1).

3. Method according to either of the preceding claims,
**characterized**
**in that** the following is/are ascertained as the at least one cumulative and/or predictive operating parameter (P2, P3, P4) of the power generation device (1):
- aging data of at least one functional component of the power generation device,
- number of switch on/switch off instances of the power generation device (1),
- frequency and/or duration of stop phases of the power generation device (1) in the form of a vehicle,
- frequency and/or duration of shutoff phases of the power generation device (1) in the form of a vehicle,
- average demand for drive power in the power generation device (1) in the form of a vehicle,
- predictive operating parameters (P4) on the basis of navigation data of a navigation system of the power generation device (1) in the form of a vehicle, and/or
- predictive operating parameters (P4) on the basis of Car2X data of a Car2X receiver of the power generation device (1) in the form of a vehicle.

4. Method according to one of the preceding claims,
**characterized**
**in that** the operating strategy of the fuel cell system (2) is set in such a way that the fuel cell system (2), including the compressor (6), is switched off when
- it is determined during the ascertainment of the at least one present operating parameter (P1) of the hybrid vehicle that the required power in the hybrid vehicle is less than a minimum power of the fuel cell system (2), the ignition of the hybrid vehicle is on, and the state of charge of the traction battery (4), SOC, corresponds to a predefinable target state.

5. Method according to one of the preceding claims,
**characterized**
**in that** the operating strategy of the fuel cell system (2) is set in such a way that the fuel cell system (2) is switched off, with the exception of the compressor (6), which is then continued to be operated in the idling mode for a predefinable time, when
- it is determined during the ascertainment of the at least one present operating parameter (P1) of the hybrid vehicle that the required power in the hybrid vehicle is less than a minimum power of the fuel cell system (2), the ignition of the hybrid vehicle is on, and the state of charge of the traction battery (4), SOC, corresponds to a predefinable target state.

6. Method according to one of the preceding claims, **characterized in that** the operating strategy of the fuel cell system (2) is set in such a way that the fuel cell system (2) is continuously operated when
- it is determined during the ascertainment of the at least one present operating parameter (P1) of the hybrid vehicle that the required power in the hybrid vehicle is less than a minimum power of the fuel cell system (2), the ignition of the hybrid vehicle is on, and the state of charge of the traction battery (4), SOC, is less than a predefinable target state.

7. Computer program (20), comprising commands that, when the computer program (20) is executed by a computer, cause said computer to carry out the method according to one of Claims 1 to 6.

8. Storage means having a computer program (20) stored thereon, which is configured and designed to carry out a method according to one of Claims 1 to 6.

9. Circuit arrangement (10) that is configured to set an operating strategy for a fuel cell system (2) of a power generation device (1), in particular in the form of a vehicle, depending on an operating mode of the power generation device (1) according to a method of Claims 1 to 6, having:
- an ascertainment unit for ascertaining at least one present operating parameter (P1) of the power generation device (1) and at least one cumulative and/or predictive operating parameter (P2, P3, P4) of the power generation device (1), and
- a setting unit for setting the operating strategy for the fuel cell system (2) on the basis of the at least one present operating parameter (P1) and the at least one cumulative and/or predictive operating parameter (P2, P3, P4) of the power generation device (1).

## Revendications

1. Procédé de réglage d'une stratégie de fonctionnement d'un système de pile à combustible (2) d'un dispositif de production d'énergie (1) conçu sous la forme d'un véhicule hybride comportant une batterie de traction (4), le système de pile à combustible (2) présentant une unité d'alimentation en air (5) comprenant un compresseur (6) destiné à alimenter en air un empilement de cellules à combustible (7) du système de pile à combustible (2), la stratégie de fonctionnement du système de pile à combustible (2) étant réglée, lorsque le système de démarrage et d'arrêt automatique du véhicule hybride est activé, en exécutant, en fonction d'un mode de fonctionnement du dispositif de production d'énergie (1), les étapes suivantes :
- la détermination d'au moins un paramètre de fonctionnement actuel (P1) du dispositif de production d'énergie (1) par une unité de détermination (3),
- la détermination d'au moins un paramètre de fonctionnement cumulé et/ou prédictif (P2, P3, P4) du dispositif de production d'énergie (1) par l'unité de détermination (3), et
- le réglage de la stratégie de fonctionnement du système de pile à combustible (2) sur la base dudit au moins un paramètre de fonctionnement actuel (P1) ainsi que dudit au moins un paramètre de fonctionnement cumulé et/ou prédictif (P2, P3, P4) du dispositif de production d'énergie (1) par une unité de réglage (8),
lorsqu'il est constaté, lors de la détermination dudit au moins un paramètre de fonctionnement cumulé et/ou prédictif (P2, P3, P4) du véhicule hybride, que, sur une période prédéfinissable, le fait que la puissance requise dans le véhicule hybride est inférieure à une puissance minimale du système de pile à combustible (2) est constaté un nombre de fois supérieur ou inférieur à un nombre prédéfinissable.

2. Procédé selon la revendication 1,
**caractérisé en ce**
**qu'**est déterminé, en tant qu'au moins un paramètre de fonctionnement actuel (P1) du dispositif de production d'énergie (1) :
- l'état de fonctionnement actuel du dispositif de production d'énergie (1),
- la vitesse actuelle du dispositif de production d'énergie (1) sous la forme d'un véhicule,
- la température de fonctionnement actuelle d'au moins un composant du système du dispositif d'alimentation en énergie (1),
- l'état de charge actuel, SOC, d'une batterie de traction (4) du dispositif d'alimentation en énergie (1), et/ou
- la puissance de consigne de tous les composants électriques du dispositif d'alimentation en énergie (1).

3. Procédé selon l'une quelconque des revendications précédentes,
**caractérisé en ce**
**qu'**est déterminé, en tant qu'au moins un paramètre de fonctionnement cumulé et/ou prédictif (P2, P3, P4) du dispositif de production d'énergie (1) :
- des données de vieillissement d'au moins un composant fonctionnel du dispositif de production d'énergie,
- le nombre de mises en marche et d'arrêts du dispositif de production d'énergie (1),
- la fréquence et/ou la durée des phases d'arrêt du dispositif de production d'énergie (1) sous la forme d'un véhicule,
- la fréquence et/ou la durée des périodes de stationnement du dispositif de production d'énergie (1) sous la forme d'un véhicule,
- le besoin moyen en puissance de propulsion du dispositif de production d'énergie (1) sous la forme d'un véhicule,
- des paramètres de fonctionnement prédictifs (P4) déterminés à partir de données de navigation d'un système de navigation du dispositif de production d'énergie (1) sous la forme d'un véhicule, et/ou
- des paramètres de fonctionnement prédictifs (P4) déterminés à partir de données Car2X d'un récepteur Car2X du dispositif de production d'énergie (1) sous la forme d'un véhicule.

4. Procédé selon l'une quelconque des revendications précédentes,
**caractérisé en ce**
**que** la stratégie de fonctionnement du système de pile à combustible (2) est réglée de sorte que le système de pile à combustible (2), y compris le compresseur (6), soit arrêté lorsque
- il est constaté, lors de la détermination dudit au moins un paramètre de fonctionnement actuel (P1) du véhicule hybride, que la puissance requise dans le véhicule hybride est inférieure à une puissance minimale du système de pile à combustible (2), que le contact du véhicule hybride est mis et que l'état de charge de la batterie de traction (4), SOC, correspond à un état de charge de consigne prédéfinissable.

5. Procédé selon l'une quelconque des revendications précédentes,
**caractérisé en ce**
**que** la stratégie de fonctionnement du système de pile à combustible (2) est réglée de sorte que le système de pile à combustible (2) soit arrêté, à l'exception du compresseur (6), qui continue ensuite à fonctionner à vide pendant une durée prédéfinissable, lorsque
- il est constaté, lors de la détermination dudit au moins un paramètre de fonctionnement actuel (P1) du véhicule hybride, que la puissance requise dans le véhicule hybride est inférieure à une puissance minimale du système de pile à combustible (2), que le contact du véhicule hybride est mis et que l'état de charge de la batterie de traction (4), SOC, correspond à un état de charge de consigne prédéfinissable.

6. Procédé selon l'une quelconque des revendications précédentes, **caractérisé en ce que** la stratégie de fonctionnement du système de pile à combustible (2) est réglée de sorte que le système de pile à combustible (2) fonctionne en continu lorsque
- il est constaté, lors de la détermination dudit au moins un paramètre de fonctionnement actuel (P1) du véhicule hybride, que la puissance requise dans le véhicule hybride est inférieure à une puissance minimale du système de pile à combustible (2), que le contact du véhicule hybride est mis et que l'état de charge de la batterie de traction (4), SOC, est inférieur à un état de charge de consigne prédéfinissable.

7. Programme informatique (20) comprenant des instructions qui, lors de l'exécution du programme informatique (20) par un ordinateur, amènent celui-ci à mettre en œuvre le procédé selon l'une quelconque des revendications 1 à 6.

8. Support de stockage sur lequel est stocké un programme informatique (20) configuré et conçu pour mettre en œuvre un procédé selon l'une quelconque des revendications 1 à 6.

9. Agencement de circuit (10) configuré pour régler une stratégie de fonctionnement d'un système de pile à combustible (2) d'un dispositif de production d'énergie (1), notamment sous la forme d'un véhicule, en fonction d'un mode de fonctionnement du dispositif de production d'énergie (1), selon un procédé de l'une quelconque des revendications 1 à 6, comprenant :
- une unité de détermination destinée à déterminer au moins un paramètre de fonctionnement actuel (P1) du dispositif de production d'énergie (1) ainsi qu'au moins un paramètre de fonctionnement cumulé et/ou prédictif (P2, P3, P4) du dispositif de production d'énergie (1), et
- une unité de réglage destinée à régler la stratégie de fonctionnement du système de pile à combustible (2) sur la base dudit au moins un paramètre de fonctionnement actuel (P1) ainsi que dudit au moins un paramètre de fonctionnement cumulé et/ou prédictif (P2, P3, P4) du dispositif de production d'énergie (1).
